# EUROPEAN PATENT APPLICATION

(11) **EP 2 660 206 A1**
(43) Date of publication of application: **06.11.2013**
(21) Application number: 11853570.7
(22) Date of filing: 03.07.2011
(51) Int. Cl.: C02F 1/463

(54) **NANO CATALYTIC ELECTROLYSIS AND FLOCCULATION APPARATUS**

(30) Priority: 30.12.2010 CN 201010614864
(71) Applicant: Boying Xiamen Science And Technology Co. Ltd., Xiamen, Fujian 361000 (CN)
(72) Inventor: ZHANG, Shiwen, Xiamen Fujian 361000 (CN)
(74) Representative: Schwerbrock, Florian
(86) International application number: PCT/CN2011/076791
(87) International publication number: WO 2012/088867

(57) **Abstract**

A nanocatalytic electrolysis and flocculation apparatus includes a housing, a water inlet on the housing, an impurities baffle in the housing, a water baffle in the housing, a drainage chamber defined by the impurities baffle and one side of the housing, a first gap between a bottom of the impurities baffle and a bottom of the housing, a water outlet on the drainage chamber, an impurities chamber defined by the water baffle and an other side of the housing, a second gap between a top of the water baffle and a top of housing, an impurities discharge port on the impurities chamber, a hydrogen discharge port on top of the housing, at least one electrolytic cell between the impurities baffle and the water baffle, an electrode in each electrolytic cell, a gas liquid separation chamber in the housing, and a drainage port on the bottom of the housing.

## Description

### BACKGROUND OF THE INVENTION

### 1. Field of the Invention

The invention relates to an electrolytic flocculation apparatus, and particularly relates to a nanocatalytic electrolysis and flocculation apparatus having a surface covered with a nanocatalytic material as a titanium electrode served as an anode.

### 2. Description of Related Art

Currently, water and wastewater disinfection, multi-use chemical precipitation purification and biochemical methods are employed. In the process, a lot of chemicals are added to produce a large quantity of sludge. In tap water production, chlorine or sodium hypochlorite is typically used for water disinfection, and then by flocculation and filtration. Wastewater treatment, usually by adding clarifying agents to a flocculation reaction conducted after sedimentation or flotation separation, and then by biological treatment. While this approach is effective, it is operating cost is prohibitively high and a large quantity of sludge produced, and it can cause a secondary pollution to the environment. In addition, with the advancement of industry and pollution due to increasing damage to the environment is worsening, there is a serious threat to the social development and human society. Environmental pollution includes water pollution, soil pollution, air pollution, noise pollution and electromagnetic pollution. Among them, the wastewater pollution is particularly serious and it has come to a point with no effective treatment available. Currently, the treatment of wastewater treatment technology can be divided into physical treatment, physico-chemical treatment, and biological treatment. Physical treatment is mainly done by precipitation, filtration, flotation, evaporation, etc. to remove larger particles and other impurities. It includes conventional filtration, vacuum filtration, pressure filtration, centrifugal filtration, microfiltration, ultra-filtration, nano-filtration, and reverse osmosis filtration. Physico-chemical treatment is used mainly to redox

(reduction-oxidation) reactions, extraction, adsorption, ion exchange, coagulation sedimentation, and electro-dialysis to remove fine suspended solids, colloids, and water-soluble substance, or to modification of a non-toxic substance to toxic substances. Biological treatment is mainly through the biological role of the wastewater colloidal and dissolved organic matter decomposition and separation to remove damage, mainly anaerobic, aerobic, anoxic fermentation.

In recent years, the electrochemical process is a materialized processing technique to develop a more active wastewater treatment technology. It is mainly a principle of using an original battery or an electrolytic principle for wastewater treatment. Currently, there are various types of micro-electrolysis and electrolysis apparatuses available for domestic wastewater, industrial organic wastewater, wastewater, and other oilfield wastewater treatment. However, the existing electrolysis devices have some problems during operation. After a period of operation, one micro-electrolysis treatment device has a filler, a filler caking, and channeling phenomena occurrence which greatly reduce treatment effect. Secondly, a stream fluidized bed solves the problem of agglomeration, but to ensure a fluidized state, fillers are needed to constantly cycle, and this can greatly consume power and compromise filler. Existing electrolysis apparatuses during operation have the same problems including electrode consumption, the electrode material polluted water, second electrode electrical density, high over-potential, high voltage, low power application efficiency, and high consumption. Thirdly, electrolysis and solid-liquid separation effect are not ideal and thus the need for secondary solid-liquid separation, long process is required.

China Patent Number CN1283595 discloses a catalytic micro-electrolysis device characterized by, from the cylinder, filling the iron filings activated carbon and catalyst bed, feeding port, discharge port, access to water, high pressure air pipe. The device can perform a catalytic wastewater treatment process, redox reactions, adsorption, bleaching, flocculation and microfiltration and other functions, and can handle a variety of industrial waste water. Its effect is good, and the device cost and operating cost are low. Its operation is easy, safe and reliable.

China Patent Number CN101544415 discloses a water phase decomposition of organic matter for puffed bed electrolysis device and treatment process. Expanding the one bed electrolytic cell comprises, arranged in the electrode within the cell and particulate electrode Yin, and circulating pump and power supply. The cell is cylindrical. It includes a cylindrical stainless steel cathode along the inner wall of the cell coaxially. The anode is rod-shaped Ti/SnO2 + Sb2O4 composite electrode, disposed in the axial position of the electrode of the spherical particles γ-Al2O3/SnO2 + Sb2O4 catalytic electrode, located between the cathode and the anode of the electrolytic reaction zone. The circulation pump can be disposed at the top and bottom of the electrolytic cell outlet respectively, and the inlet pipe is provided with the electrolytic water circulating system composed of the reaction zone.

### SUMMARY OF THE INVENTION

The object of the invention is for solving deficiencies of the conventional electrolysis devices and the electrolysis apparatuses having a low voltage, a low current density, a less energy consumption, a high electrical efficiency. There is no electrolysis electrode consumption, solid-liquid separation and liquid separator functions as a nanocatalytic electrolysis and flocculation apparatus.

### Technology Solutions

The invention has a housing, a water inlet is at bottom of the housing, the water inlet pipe and water pipe connecting through the casing equipped with an impurities baffle and a water baffle, an impurities baffle and the shell on one side of the body constitutes the drainage chamber, the impurities baffle having a bottom with a gap at the bottom of the drainage chamber is provided with a drain, a water baffle, and the other side of the housing constitutes an impurities chamber, the top flap at the top of the housing having a gap with an impurities tap drainage chamber located, an impurities discharge port in the housing at the top having a hydrogen discharge port, the impurities baffle is provided between the water baffle and the at least one cell, the cell bottom secured to the bottom of the housing, open at the top cell which has a gap with respect to the top of the housing, an electrode mounted within the cell, the electrode includes an anode and a cathode, the anode and the anode constituting a DC power supply connection, the cathode of the DC power supply and a cathode being coupled together, and the electrolytic cell above the gas liquid separation chamber is formed within the housing. Drain disposed in the housing bottom water baffle is located between the adjacent cells.

The housing may be provided with inner and outer layers, the inner layer can be a plastic inner layer and the outer layer can be a steel sheet.

The electrolytic cell is a cylindrical, cubic or parallelepiped electrolytic cell.

Top of the cell is open and there is a gap of 1/5 to 1/4 height of the housing below the top of the housing.

The gap above top of the electrolytic cell is 30 to 50mm.

The anode surface is covered with grains of 10 to 35nm titanium oxide coating of the metal substrate. The anode can be a plate-shaped anode, an anode arc shape, or a cylindrical shape such as anode or anode mesh.

Covering the surface of the anode may be a metal oxide coating having a grain titanium anode substrate. Cathode may be titanium, iron cathode, the aluminum cathode, stainless steel cathode, zinc anode, copper cathode, nickel cathode, lead cathode, or graphite cathode.

The outlet of the drainage chamber may be disposed in 3/4 to 4/5 height of the housing. Between the anode and the cathode voltage can be 2 to 8V, the current density is 300mA/cm², voltage between the anode and the cathode is preferably 3 to 6V, and the current density is preferably 150 to 230mA/cm².

In time for disinfection and purification of water electrolysis, the anode surface by be covered with electrical catalytic nano-coating to reduce the over-potential electrolysis, so that the water in the lower voltage conditions electrolysis, producing nascent oxygen, hydroxyl and nascent hydrogen. The following four effects are brought about:
1. Produced by electrolysis are nascent oxygen and strong oxidizing substances such as hydroxyl water to kill germs, bacteria, algae and plankton.
2. The electrolysis of nascent oxygen and hydroxyl oxidative decomposes the nascent organic matter in water, to reduce water COD (chemical oxygen demand).
3. The electric field, so that the water body destabilization, prompts the presence of suspended solids in the water in order to kill microbes, bacteria, algae, and plankton corpses dissolved in water, thereby producing colloidal flocculation.
4. The new eco hydrogen generated by the cathode forming a large number of bubbles floating with gas, will bring a large amount of suspended solids, to effect solid-liquid separation, thereby further reducing the water COD, color, turbidity and other pollution Indicator.

Through above four effects it is possible of achieving water disinfection and purification.

On seawater and brackish water purification disinfection, by covering the surface with the coating on the anode electric catalytic reduction electrolysis over-potential, allowing seawater, brackish water conditions, at a lower voltage electrolysis, producing nascent chlorine (Cl) and nascent hydrogen (H), and the following three effects are brought about:
1. The electrolysis of the nascent chlorine (Cl) to kill microorganisms in the water, algae and plankton, eliminating microbes, algae and plankton of membrane fouling.
2. The electrolysis of the nascent chlorine (Cl) oxidation of organic matter in water, to reduce water COD.
3. In the electrolysis of the electric field, so that the water body destabilization, prompting the presence of suspended solids in the water, the water to kill microbes, bacteria, algae, plankton corpses and dissolved in water produces colloidal flocculation.

Through the above three effects, it is possible of enabling seawater, brackish water purification and disinfection.

In the treatment of wastewater, by covering the surface of the coating on the anode electric catalytic reduction electrolysis over-potential, allowing wastewater at a lower voltage conditions electrolysis, producing nascent strong oxidizing substances, there is large amount of chlorine ions, the resulting is the nascent chlorine (Cl), and the nascent hydrogen (H) without the presence of chloride ions, resulting in a nascent oxygen (O), hydroxyl (OH) and the nascent hydrogen (H), and the following sixe effects are brought about:
1. Produced by electrolysis nascent strong oxidizing water to kill germs, bacteria, algae and plankton.
2. Produced by electrolysis nascent strong oxidizing substances rapid oxidation and decomposition of organic matter in the wastewater, reducing wastewater COD.
3. Produced by electrolysis nascent strong oxidizing substances rapid oxidation and decomposition of colored substances in the wastewater chromophore scission or open loop, so as to decolorize.
4. Produced by electrolysis nascent strong oxidizing substances rapid oxidation and decomposition of ammonia nitrogen in the wastewater.
5. Generated during electrolysis OH⁻ can be used with several metal ions (such as Fe³⁺) precipitate settling down, these small particles can be precipitated from the coagulant role in promoting aggregation substance suspended in solution deposition. Another electrolysis process, the electric field can quickly destroy the gel structure in water, the water destabilization prompted present in suspended solids in the wastewater, the water to kill microorganisms, bacteria, algae and plankton carcasses, is dissolved in water colloidal Long flocculation sedimentation, which greatly limit and reduce the amount of clarifying agents dosing.
6. The cathode produced by forming a large number of new eco hydrogen bubbles go up with the gas, will bring a large amount of suspended solids, to effect solid-liquid separation, thereby further reducing the wastewater COD, color, turbidity, etc. pollution indicator.

The above six effects can realize the wastewater purification.

In summary, the invention is a set of nanotechnology, catalysis and electrochemical technology as one of the new water treatment plant, and its nano-electrodes with high electro-catalytic activity, the electrolysis process will generate a lot of free radicals with strong oxidizing, oxidative decomposition of the water quickly and effectively reducing substances (including dyes and other organic matter), in addition, there are the following effects:

### 1. Flocculation

OH⁻ produced by electrolysis with some metal ions (such as Fe³⁺) precipitate settling down, these small particles can be precipitated from the coagulant role in promoting aggregation substance suspended in solution deposition. Another electrolysis process, the electric field can quickly destroy the gel structure in water, to flocculate and reduce in order to greatly limit the amount of clarifying agents dosing.

### 2. Decolorization

Produced by electrolysis with strong oxidizing radicals which can quickly degrade the molecular structure of the dye in water, and reduce the quality of the color of the colored material.

### 3. Reducing the role of ammonia

Produced by electrolysis nascent strong oxidizing substances can rapidly oxidize and decompose ammonia nitrogen in the wastewater.

### 4. Sterilization effect

Electrolysis process will generate a lot with strong oxidizing free radicals, can quickly kill bacteria and other microorganisms and viruses, and have a strong sterilization effect.

### 5. Inhibition of the growth of algae effect

Electrolysis process will generate a lot of materials with strong oxidizing free radicals, oxidative decomposition of the cell wall can quickly destroy the cell structure of algae, algae blocking DNA replication, and inhibit the growth of algae.

### 6. Flotation effect

The emergence of new eco-cathode formation of large bubbles of hydrogen, with the gas go up, will bring out a lot of suspended solids, to achieve the effect of solid-liquid separation, further reducing wastewater COD, color, turbidity and other pollution indicator.

### Advantageous Effects

Nanocatalytic electrolysis and flocculation apparatus for water purification treatment, has the following significant advantages:
1. By adding clarifying agents and flotation agents chemicals are only required only in one-third of the typical process, and this not only saves water treatment costs but also significantly reduces material consumption and does not produce secondary pollution.
2. By adding clarifying agents and flotation agents chemicals are only required in one-third of the typical process, the sludge is only one-third of typical technologies to significantly reduce sludge discharge, and reduce solid waste disposal costs.
3. Nanocatalytic degradation of electrolysis can be difficult to degrade biological macromolecules, to improve the follow-up A/O conditions, and improve A/O results.

The above and other objects, features and advantages of the invention will become apparent from the following detailed description taken with the accompanying drawings.

### BRIEF DESCRIPTION OF THE DRAWINGS

FIG. 1 schematically depicts a nanocatalytic electrolysis and flocculation apparatus according to the invention;
FIG. 2 is a sectional view taken along lines B-B of FIG. 1; and
FIG. 3 is a sectional view taken along lines A-A of FIG. 1.

### DETAILED DESCRIPTION OF THE INVENTION

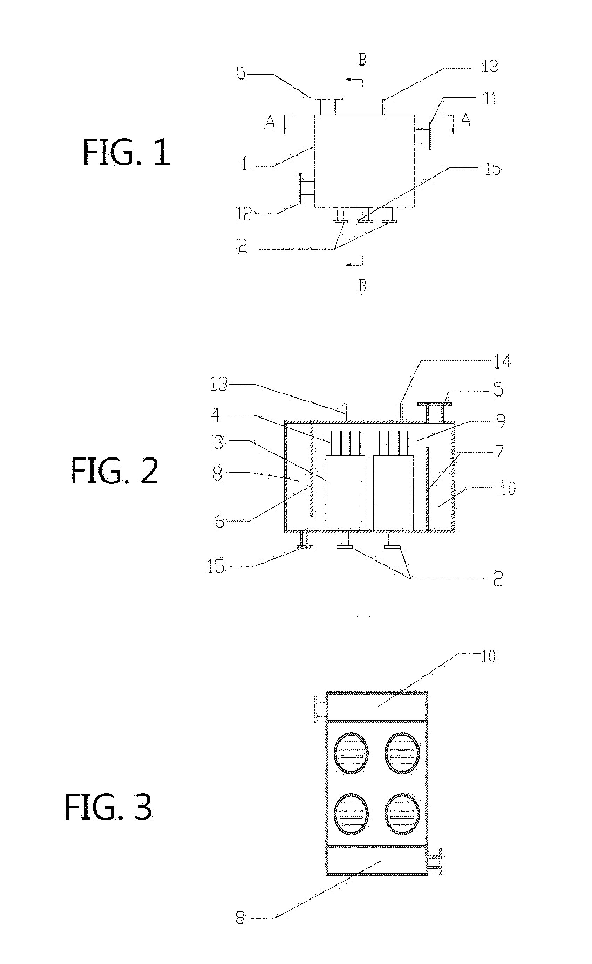

Referring to FIGS. 1 to 3, a nanocatalytic electrolysis and flocculation apparatus in accordance with the invention is shown and discussed in detail below.

The invention comprises a housing 1, a water inlet 2, an electrolytic cell 3, an electrode 4, a hydrogen discharge port 5, an impurities baffle 6, a water baffle 7, a drainage chamber 8, a gas liquid separation chamber 9, an impurities chamber 10, a water outlet 11, an impurities discharge port 12, an anode terminal 13, a cathode terminal 14, and a drainage port 15.

Bottom of the housing 1 is provided with a water inlet 2. A waste water inlet is connected via a conduit pipe. The housing 1 is equipped with the impurities baffle 6 and the water baffle 7. The impurities baffle 6 and the side of the housing 1 constitute the drainage chamber 8.the bottom of the baffle 6 has a gap at the bottom of the housing 1. The drainage chamber 8 is provided with the water outlet 11. A water baffle 7 and the other side of the housing 1 constitute an impurities chamber 10. The water baffle 7 at top of the housing 1 there is a gap at the impurities chamber 10 at port 12. Top of the housing 1 besides the impurities discharge port 12 there is provided at one end the hydrogen port 5. The impurities baffle 6 and the water baffle 7 have at least one electrolytic cell 3. The bottom of the electrolytic cell 3 of the housing 1 is secured to the bottom of the electrolytic cell 3 which is open at the top and there is a gap with the top of the housing 1. The electrolytic cell 3 is fitted with an electrode 4. The electrode 4 includes an anode and a cathode. The anode and the anode of the electrode 4 are connected to the cathode and the cathode of the DC power supply respectively. Above the electrolytic cell 3 within the housing is the gas liquid separation chamber 9. Drain located in the bottom of the housing 1 is located between the water baffle and adjacent cell.

The housing 1 comprises inner and outer layers. The outer layer is of steel and the inner layer is made by a plastic manufacturing processing. Water inlet 2 is located in the bottom of the housing 1 through the inlet valves and pipes and pipe joints. Electrolytic cell 3 is secured to the housing 1 at the bottom. The bottom of the electrolytic cell 3 and the top of the open top of the housing 1 is spaced by a gap of 1/5 to 1/4 of the height. At least one cell is provided in the electrolytic cell 3. The electrolytic cell 3 is cylindrical. Within the electrolytic cell 3, there is provided an electrode 4. The titanium substrate surface is covered with grains of 10 to 35nm metal oxide coating of stable anode. The anode is plate-shaped, arc-shaped, cylindrical or a mesh. Electrolytic cell 3 is made of titanium, iron, aluminum, stainless steel, zinc, copper, nickel, lead, and graphite as a cathode material. The cathode has an arc shape, a cylindrical shape or a mesh shape. Water inlet 2 and the impurities discharge port 12 of the nanocatalytic electrolysis and flocculation apparatus are provided in the bottom thereof. The water outlet 11 is disposed at 3/4 to 4/5 height of the drainage chamber 8. Pollution generated is discharged through the drainage port 15. Hydrogen discharge port 5 is provided at the top of the impurities discharge port 12. Hydrogen produced by electrolysis is discharged through a discharge port 5. Water baffle 7 is secured to the bottom of the housing 1 and is at 6/7 length of the apparatus. The impurities chamber 10 is disposed in the housing 1. At the upper housing 1,the top is spaced by a gap of 1/5 to 1/4 of the electrolytic cell 3 and is greater than 30 to 50mm. Bubbles generated by electrolysis and impurities over the water baffle are discharged into the impurities chamber 10 and is further discharged through the impurities discharge port 12. Impurities baffle 6 is secured to the top of the housing 1 and is of 1/7 length of the apparatus, thereby constituting the drainage chamber 8. The lower bottom of the housing 1 has a gap of 1/5 to 1/4 of the height of the apparatus. Waste water after the electrolysis is flowed through bottom gaps of the retainer plate 6 into the drainage chamber 8 prior to discharging through the water outlet 11. Impurities baffle 6 of the housing 1 is divided into an upper gas liquid separation chamber 9. The hydrogen produced by electrolysis is subjected to gas liquid separation in the gas liquid separation chamber 9 and is then discharged through the discharge port 5. Anode terminal 13 is connected to anode of the DC power supply and cathode terminal 14 is connected to cathode of the DC power supply respectively.

In operating the nanocatalytic electrolysis and flocculation apparatus, voltage between the anode and the cathode is 2 to 8V, current density is 10 to 300 mA², optimum operating voltage between the anode and the cathode is 3 to 6V, and the optimum current density is 150 to 230mA/cm².

Following are preferred embodiments of the nanocatalytic electrolysis and flocculation apparatus of the invention:

### Preferred embodiment 1

For fresh water purification and disinfection treatment effect

Fresh water pump is provided in the nanocatalytic electrolysis and flocculation apparatus. The voltage between the electrodes is 5 to 8V. Electrolyte density is 10 to 200mA/cm². Fresh water is kept in the nanocatalytic electrolysis and flocculation apparatus for 0.5 to 1 minute. Electricity consumed for fresh water electrolysis is controlled at 0.009 to 0.010 degree/m³. Table 1 shows results before treatment (untreated fresh water indicator) and Table 2 shows results after treatment by the nanocatalytic electrolysis and flocculation apparatus.

**Table 1**

| No. | Items | Indicator | No. | Items | Indicator |
|---|---|---|---|---|---|
| 1 | Smell and taste | Odorless | 5 | COD (mg/L) | 9 |
| 2 | pH | 6.9 | 6 | Ammonia (mg/L) | 0.5 |
| 3 | SS (mg/L) | 15 | 7 | Algae (a/L) | 5.5×10⁶ |
| 4 | Turbidity/NTU | 4 | 8 | Total number of bacteria | 2.4E +05 |

**Table 2**

| No. | Items | Indicator | No. | Items | Indicator |
|---|---|---|---|---|---|
| 1 | Smell and taste | Odorless | 5 | COD (mg/L) | 0 |
| 2 | pH | 6.9 | 6 | Ammonia (mg/L) | Undetected |
| 3 | SS (mg/L) ≤ | 1 | 7 | Algae (a/L) | 135 |
| 4 | Turbidity (NTU) ≤ | 1 | 8 | Total bacterial count ≤ | 30 |

### Preferred embodiment 2

Purification and disinfection of the water treatment effect

Sea water pump is provided in the nanocatalytic electrolysis and flocculation apparatus. The voltage between the electrodes is 3 to 5V, electrolyte density is of 10 to 260mA/cm², sea water is kept in the nanocatalytic electrolysis and flocculation apparatus for 0.5 to 1 minute, and the electricity consumption of the electrolytic water is controlled at 0.003 to 0.004 degree/m³. Table 3 shows results before treatment (untreated sea water indicator) and Table 4 shows results after treatment by the nanocatalytic electrolysis and flocculation apparatus.

**Table 3**

| No. | Items | Indicator | No. | Items | Indicator |
|---|---|---|---|---|---|
| 1 | Smell and taste | Odorless | 5 | COD (mg/L) | 7 |
| 2 | pH | 8.1 | 6 | Ammonia (mg/L) | 0.3 |
| 3 | SS (mg/L) | 19 | 7 | Algae (a/L) | 1.5×10² |
| 4 | Turbidity/NTU | 3.5 | 8 | Total bacterial count (a/L) | 1.9E +03 |

**Table 4**

| No. | Items | Indicator | No. | Items | Indicator |
|---|---|---|---|---|---|
| 1 | Smell and taste | Odorless | 5 | COD (mg/L) ≤ | 1 |
| 2 | pH | 8.1 | 6 | Ammonia (mg/L) ≤ | Undetected |
| 3 | SS (mg/L) ≤ | 1 | 7 | Algae (a/L) | Undetected |
| 4 | Turbidity/NTU ≤ | 1 | 8 | Total bacterial count (a/L) ≤ | 1 |

### Preferred embodiment 3

Depth treatment of dyeing wastewater treatment effect

Secondary clarifier dyeing wastewater after A/O processing flows to the nanocatalytic electrolysis and flocculation apparatus, the voltage between the electrodes is 3 to 6V, electrolysis density is 10 to 300 mA/cm² regarding catalytic electrolysis, keeping water in the nanocatalytic electrolysis and flocculation apparatus for 2 to 5min, the electricity consumption of electrolytic water is controlled at 0.8 to 1.0 degrees/m³. Table 5 shows results before treatment (mixed pools of untreated wastewater dyeing synthetic indicators) and Table 6 shows results after treatment (nanocatalytic electrolysis treatment after dyeing wastewater indicators).

**Table 5**

| No. | Items | Unit | Measured values | No. | Items | Unit | Measured values |
|---|---|---|---|---|---|---|---|
| 1 | COD_{Cr} | mg/L | 316 | 5 | S²⁻ | mg/L | 2 |
| 2 | SS | mg/L | 80 | 6 | Chroma | | 200 |
| 3 | Ammonia | mg/L | 3.5 | 7 | pH | | 7.3 |
| 4 | BOD₅ | mg/L | 12 | 8 | Sodium chloride | 0/₀₀ | 2.3 |

**Table 6**

| No. | Items | Unit | Measured values | No. | Items | Unit | Measured values |
|---|---|---|---|---|---|---|---|
| 1 | COD_{Cr} | mg/L | 253 | 5 | S²⁻ | mg/L | 2 |
| 2 | SS | mg/L | 211 | 6 | Chroma | | 30 |
| 3 | Ammonia | mg/L | 0 | 7 | pH | | 7.3 |
| 4 | BOD₅ | mg/L | 78 | 8 | Sodium chloride | ‰ | 2.3 |

### Preferred embodiment 4

### Effectiveness for tannery wastewater treatment

Tannery wastewater flows into the coarse grid filter to be filtered in order to remove large particles of solids, next flows into the conditioning tank mix, and adjust the pool water by flowing through a sieve, flows into a waste water pump with impurities such as hair removed, flows into the desulfurization reaction cell, desulfurized wastewater flows to nanocatalytic electrolysis and flocculation apparatus, the electrolysis voltage is 2 to 500V, the voltage between the electrodes is 3 to 6 V, electrolyte density is 10 to 300 mA², the electrolytic water is kept in the nanocatalytic electrolysis and flocculation apparatus for 5 to 15 minutes, electricity consumption of electrolysis is controlled at 0.8 to 1.2 degrees/m³. Table 7 shows results before treatment (tanning synthetic wastewater after desulfurization indicators) and Table 8 shows results after treatment (tanning synthetic wastewater through nanocatalytic electrolysis indicators).

**Table 7**

| No. | Items | Unit | Measured values | No. | Items | Unit | Measured values |
|---|---|---|---|---|---|---|---|
| 1 | COD_{Cr} | mg/L | 3560 | 6 | S²⁻ | mg/L | 2 |
| 2 | SS | mg/L | 3110 | 7 | Chroma | | 3200 |
| 3 | Ammonia | mg/L | 265 | 8 | pH | | 9.3 |
| 4 | Cr | mg/L | 120 | 9 | Conductivity | ns/cm | 3200 |
| 5 | BOD₅ | mg/L | 1730 | 10 | Sodium chloride | ‰ | 1.6 |

**Table 8**

| No. | Items | Unit | Measured values | No. | Items | Unit | Measured values |
|---|---|---|---|---|---|---|---|
| 1 | COD_{Cr} | mg/L | 820 | 6 | S²⁻ | mg/L | 2 |
| 2 | SS | mg/L | 1310 | 7 | Chroma | | 30 |
| 3 | NH₃-N | mg/L | 95 | 8 | pH | | 9.3 |
| 4 | Cr | mg/L | 93 | 9 | Conductivity | ns/cm | 3200 |
| 5 | BOD₅ | mg/L | 790 | 10 | Sodium chloride | ‰ | 1.3 |

### Preferred embodiment 5

Effects of wastewater in secondary sedimentation tank after biochemical treatment by the nanocatalytic electrolysis and flocculation apparatus

After going through A/O processing secondary clarifier tannery wastewater flows to the nanocatalytic electrolysis and flocculation apparatus, electrolysis voltage is 2 to 500V, the voltage between the electrodes is 3 to 6V, electrolysis density is 10 to 300 mA/cm², wastewater is kept in the nanocatalytic electrolysis and flocculation apparatus for 5 to 15min, the electricity consumption of electrolytic water is controlled at 0.8 to 1.2 degrees/m³. Table 9 shows results before treatment (post-secondary settling tank tannery wastewater biochemical indicators) and Table 10 shows results after treatment (indicator of wastewater in secondary sedimentation tank after biochemical treatment by the nanocatalytic electrolysis and flocculation apparatus).

**Table 9**

| No. | Items | Unit | Measured values | No. | Items | Unit | Measured values |
|---|---|---|---|---|---|---|---|
| 1 | COD_{Cr} | mg/l | 165 | 4 | BOD₅ | mg/l | 10 |
| 2 | SS | mg/l | 22 | 5 | Chroma | | 120 |
| 3 | Ammonia | mg/l | 2.9 | 6 | pH | | 9.3 |

**Table 10**

| No. | Items | Unit | Measured values | No. | Items | Unit | Measured values |
|---|---|---|---|---|---|---|---|
| 1 | COD_{Cr} | mg/l | 108 | 4 | BOD₅ | mg/l | 93 |
| 2 | SS | mg/l | 55 | 5 | Chroma | | 8 |
| 3 | Ammonia | mg/l | 1.2 | 6 | pH | | 9.3 |

### Industrial Applicability

The nanocatalytic electrolysis and flocculation apparatus of the invention for water purification treatment has the following advantages: By adding clarifying agents and flotation agents chemicals are required only one-third of the typical process. It not only saves water treatment costs but also significantly reduces material consumption and does not produce secondary pollution. By adding clarifying agents and flotation agents chemicals are required only one-third of the typical process. The produced sludge is only one-third of typical technologies. It significantly reduces sludge discharge and reduces solid waste disposal costs. Nanocatalytic degradation of biochemistry electrolysis can greatly degrade macromolecules which are difficult of being degraded by typical biochemistry electrolysis. It improves the subsequent A/O conditions and increases A/O results. Therefore, the invention has a good industrial applicability.

While the invention has been described in terms of preferred embodiments, those skilled in the art will recognize that the invention can be practiced with modifications within the spirit and scope of the appended claims.

## Claims

1. A nanocatalytic electrolysis and flocculation apparatus comprising:
a housing;
a water inlet disposed at a bottom of the housing and communicating therewith;
an impurities baffle disposed in the housing;
a water baffle disposed in the housing;
a drainage chamber defined by the impurities baffle and one side of the housing;
a first gap formed between a bottom of the impurities baffle and a bottom of the housing;
a water outlet disposed on the drainage chamber and communicating therewith;
an impurities chamber defined by the water baffle and an other side of the housing;
a second gap formed between a top of the water baffle and a top of housing;
an impurities discharge port disposed on the impurities chamber and communicating therewith;
a hydrogen discharge port disposed on the top of the housing and being proximate to the impurities discharge port;
at least one electrolytic cell disposed between the impurities baffle and the water baffle, a bottom of each of the at least one electrolytic cell being secured to the bottom of the housing, and a top of each of the at least one electrolytic cell being open and spaced from the top of the housing by a third gap;
an electrode disposed in each of the at least one electrolytic cell, the electrode including an anode and a cathode;
a gas liquid separation chamber disposed above the at least one electrolytic cell in the housing; and
a drainage port disposed on the bottom of the housing and communicating therewith.

2. The nanocatalytic electrolysis and flocculation apparatus of claim 1, wherein the housing is provided with an inner layer and an outer layers, the inner layer being formed of plastic and the outer layer being formed of steel.

3. The nanocatalytic electrolysis and flocculation apparatus of claim 1, wherein each of the at least one electrolytic cell is cylindrical, cubic, or shaped as parallelepiped.

4. The nanocatalytic electrolysis and flocculation apparatus of claim 1, wherein the third gap is one-fifth to one-fourth height of the housing.

5. The nanocatalytic electrolysis and flocculation apparatus of claim 1, wherein the second gap is 30 to 50mm higher than the at least one electrolytic cell.

6. The nanocatalytic electrolysis and flocculation apparatus of claim 1, wherein the anode is covered with a thickness of 10 to 35nm of grain sized metal oxide coated with titanium anode substrate, and the anode is a plate-shaped anode, an arc-shaped anode, or a mesh anode.

7. The nanocatalytic electrolysis and flocculation apparatus of claim 1, wherein the cathode is covered with a thickness of grain sized metal oxide coated with titanium anode substrate, and the cathode is a titanium cathode, an iron cathode, an aluminum cathode, a stainless steel cathode, a zinc anode, a copper cathode, a nickel cathode, a lead cathode, or a graphite cathode, and wherein the cathode is shaped as an arc, a cylinder, or a mesh.

8. The nanocatalytic electrolysis and flocculation apparatus of claim 1, wherein the water outlet is disposed on three-fourth to four-fifth height of the drainage chamber.

9. The nanocatalytic electrolysis and flocculation apparatus of claim 1, wherein an electric potential difference between the anode and the cathode is 2 to 8V, and a current density is 10 to 300 mA/cm².

10. The nanocatalytic electrolysis and flocculation apparatus of claim 9, wherein the electric potential difference between the anode and the cathode is 3 to 6V, and the current density is 150 to 230 mA/cm².
